# EUROPÄISCHE PATENTSCHRIFT

(11) **EP 2 177 808 B1**
(45) Veröffentlichungstag und Bekanntmachung des Hinweises auf die Patenterteilung: **14.03.2012**
(21) Anmeldenummer: 08166533.3
(22) Anmeldetag: 14.10.2008
(51) Int. Cl.: F16L 37/14, F16L 37/088

(54) **Fluidleitung aus Kunststoff mit einer als Kunststoff-Anbauteil ausgebildeten Steckarmatur**
Plastic fluid conduit with a connecting fitting constructed as plastic mounted part
Conduite de fluide en plastique dotée d'une armature enfichable en plastique

(43) Veröffentlichungstag der Anmeldung: 21.04.2010
(73) Patentinhaber: ZF Friedrichshafen AG, 88038 Friedrichshafen (DE); Fränkische Industrial Pipes GmbH & Co. KG, 97486 Königsberg (DE)
(72) Erfinder: Gebauer, Dieter, 97502, Euerbach (DE); Koberstein, Ralf, 97762, Hammelburg (DE); Krauß, Manfred, 97265 Hettstadt (DE); Schröter, Sören, 96103 Hallstadt (DE)

(56) Entgegenhaltungen:
- EP-A- 1 701 082
- DE-U1- 8 604 217
- DE-U1-202005 005 319
- GB-A- 1 584 085
- US-A- 3 773 360
- US-A- 5 681 060

## Beschreibung

Die vorliegende Erfindung betrifft eine Fluidleitung aus Kunststoff mit einer als Kunststoff-Anbauteil ausgebildeten Steckarmatur.

Eine Fluidleitung der eingangs genannten Art geht bereits aus dem US-Patent Nr. 4,874,174 hervor. Im Endbereich der dort dargestellten Kunststoffleitung ist integral mit dieser ein Bund und davon axial beabstandet ein Ringkragen ausgebildet, deren Außendurchmesser denjenigen der Kunststoffleitung übersteigt und welche zwischen sich eine Nut zur Aufnahme eines an einer Innenumfangsfläche einer Muffe anliegenden Dichtringes aufspannen. Die andere Axialseite des Ringkragens bildet einen Anschlag für eine auf dem Kunststoffrohr geführte Hülse, welche zum Eingriff eines Sicherungselementes an deren Außenumfangsfläche eine weitere Nut aufweist, die axial zu einer an der Muffe ausgebildeten Schlitzanordnung ausgerichtet ist. Auf der dem Ringkragen abgewandten Axialseite der Hülse ist, soweit dort ausgeführt, keine weitere Axialsicherung für die Hülse vorgesehen. Die Hülse ist radial nicht aufspreizbar, so dass diese entweder bereits vor der Erzeugung des Bundes und des Ringkragens oder danach von dem anderen entfernten, offenen Ende auf das Rohr geschoben werden muss. Es sind der Schrift auch keine Hinweise entnehmbar, auf welche Weise der Bund und der Ringkragen gefertigt werden.

Die DE 35 31 926 A1 beschreibt eine lösbare Steckverbindung zwischen einem Rohr und einer Schlaucharmatur, wobei das Rohr in dessen Endbereich zunächst mit einer ersten Bördelung zur axialen Festlegung einer dort aufschiebbaren Hülse versehen ist, die mit einer zu der Bördelung zusammenwirkenden Ringnut ausgebildet ist. Zur Festlegung der Hülse ist diese in deren Fügerichtung mit einem sich über einen Teil deren axialen Erstreckung vorgesehenen Schlitz ausgeführt, so dass sich diese beim Passieren dieser Bördelung aufweiten und dort einschnappen kann. An der Außenumfangsfläche der Hülse ist eine Ringnut ausgebildet, in welche im zusammengesteckten Zustand durch einen in der Schlaucharmatur bereitgestellten Schlitz ein Sicherungselement eingreifen und somit das Rohr und die Schlaucharmatur gegenseitig fixieren kann. Axial zwischen dem Rohrende und der Hülse ist eine Ringdichtung auf das Rohr aufgeschoben, welche mittels einer, erst nach der Montage der Hülse am Rohrende ausgebildeten zweiten Bördelung gegen Verlieren gesichert ist. Damit ist die Herstellung des Steckerteils der Steckverbindung relativ aufwändig. Es sind der DE 35 31 926 A1 zudem keine Angaben über die stoffliche Beschaffenheit des Rohres, noch darüber, ob das Rohr insgesamt eine Fluidleitung oder lediglich ein an einer Fluidleitung angeordnetes Steckerelement bildet.

Mit der DE 2 028 712 A1 ist eine lösbare Schlauchkupplung bekannt geworden, bei der im Endbereich eines Schlauches ein Stecker eingefügt ist, welcher eine auf diesem verlagerbare Hülse zur Verbindung mittels eines Sicherungselementes mit einer Muffe trägt. Die Hülse ist mit axialem Spiel zwischen einem durch das Schlauchende gebildeten Endbund und einem am Stecker vorgesehenen Stirnbund festgelegt. Zur Anordnung eines Dichtringes ist an dem Stirnbund eine Umfangsnut vorgesehen. Bei der Montage des Steckers muss also zunächst die Hülse auf den Stecker aufgeschoben werden, bevor dieser mit dem Schlauchende verbunden werden kann. Eine Angabe zu den Verwendung findenden Werkstoffen ist der genannten Schrift nicht zu entnehmen.

Die EP 1 701 082 B1 offenbart eine weitere, nicht zur Gattung der eingangs erwähnten Art zugehörende Fluidleitung. Am Endabschnitt der dort beschriebenen Fluidleitung ist eine erste Umfangsnut angeordnet, in die unter formschlüssigem Eindringen von Kunststoff eine Steckarmatur durch Umspritzen koaxial angeformt ist. Zur Aufnahme eines Dichtrings ist in dem über die Steckarmatur vorstehenden Bereich eine zweite Umfangsnut zur Aufnahme eines Dichtringes ausgebildet. Die Herstellung der ersten und zweiten Nut erfolgt in einem vom Fertigungsprozess der Fluidleitung unabhängigen Schritt, z.B. durch eine nachträgliche spanende Bearbeitung. Erst danach kann in einem weiteren Schritt die Steckarmatur innerhalb der ersten Nut ausgebildet werden. Auch die Herstellung dieser Steckarmatur ist damit insgesamt relativ aufwändig und mit entsprechend hohen Kosten verbunden.

Von dem genannten Stand der Technik ausgehend, stellt sich die Erfindung die Aufgabe, eine Fluidleitung aus Kunststoff mit einer als Kunststoff-Anbauteil ausgebildeten Steckarmatur gemäß der eingangs genannten Art bereitzustellen, die kostengünstig herstellbar und leicht montierbar ist.

Die vorstehend genannte Aufgabe wird bei einer gattungsgemäßen Kunststoff-Fluidleitung durch die im Kennzeichen von Patentanspruch 1 angegebenen Merkmale gelöst.

Es wird demnach eine Fluidleitung aus Kunststoff mit einer als Kunststoff-Anbauteil ausgebildeten Steckarmatur zur Herstellung einer fluiddichten Steckverbindung mit einer dazu komplementär ausgebildeten Muffe vorgeschlagen, welche eine an einem Endabschnitt der Fluidleitung integral ausgebildete erste Stützkontur zur axialen Abstützung der Fluidleitung an der Steckarmatur unter der Wirkung eines Fluiddrucks und einen axial über die Steckarmatur vorstehenden Abschnitt der Fluidleitung umfasst, an dem eine Dichtnut zur Aufnahme eines Dichtrings ausgebildet ist wobei der Endabschnitt integral mit der Fluidleitung ausgebildet ist. Die Fluidleitung zeichnet sich dadurch aus, dass die Steckarmatur radial aufweitbar ausgeführt ist und dass die Fluidleitung mit der an dieser ausgebildeten ersten Stützkontur und der Dichtnut einerseits und die Steckarmatur andererseits mit deren Außendurchmesser bzw. mit deren Innendurchmesser so zueinander dimensioniert sind, dass beim Zusammenfügen der Fluidleitung mit der Steckarmatur letztere axial über die Dichtnut und zumindest teilweise über die erste Stützkontur aufschiebbar ist.

Es ist von Vorteil, dass zunächst die Fluidleitung eine vollständige Formgebung, insbesondere im Endbereich der Steckverbindung, erhalten kann und dass die vorzugsweise als zylindrisches, hülsenförmiges Anbauteil ausgeführte Steckarmatur anschließend unmittelbar von diesem Fluidleitungsende aus an dem Endabschnitt eingeführt werden und an der dort befindlichen ersten Stützkontur axial festgelegt werden kann, wodurch ein Abgleiten der Fluidleitung von der Steckarmatur unter der Wirkung eines Fluiddruckes sicher verhindert wird. Als erste Stützkontur genügt beispielsweise eine von dem Steckverbindungsende der Fluidleitung wegweisende Anlagefläche in Form eines Absatzes.

Weitere Vorteilhafte Weiterbildungen und Ausgestaltungen der Erfindung sind in den abhängigen Ansprüchen angegeben.

Vorteilhaft ist weiter auch eine axial beidseitige Festlegung der Steckarmatur, wobei die Fluidleitung dazu eine zweite Stützkontur in der zur ersten Stützkontur abgewandten Axialrichtung aufweist. Dadurch wird die Steckarmatur im Wesentlichen ortsfest an der Fluidleitung gehalten und kann dort nicht oder nur sehr begrenzt in die der Steckverbindung abgewandte Richtung verschoben werden. Als zweite Stützkontur kann an der Fluidleitung eine Stütznut oder ein Stützwulst ausgebildet sein. Zur Ermöglichung eines radialen Aufweitens der Steckarmatur kann an dieser beispielsweise ein über deren gesamte oder nur über einen Teil der axialen Erstreckung reichender Schlitz vorgesehen sein.

Mit Vorteil entspricht der Außendurchmesser der Fluidleitung im Bereich der ersten Stützkontur und der Dichtnut im Wesentlichen einem nominalen Außendurchmesser der Fluidleitung. Es ist auch möglich, dass die Fluidleitung zur Ausbildung der Dichtnut und der ersten Stützkontur zumindest einen gegenüber deren Außendurchmesser überhöhten Bereich aufweist, dessen Überhöhung eine halbe Wandstärke der Fluidleitung jedoch nicht übersteigt.

Bei einer derartigen Fluidleitung entspricht also die Außenkontur im Bereich der Steckverbindung dem Fluidleitungsdurchmesser oder weicht nur im geringen Maße von diesem ab, so dass einerseits eine leichte Montage und andererseits ein zuverlässiger Sitz der Dichtung und der Steckarmatur erzielbar sind.

Für eine kompakte Bauweise der Fluidleitung mit einer möglichst kleinen Dichtfläche ist es vorteilhaft, den Dichtring mit einem möglichst kleinen Außendurchmesser auszuführen und zu dessen Anordnung an der Fluidleitung den Nutgrund der Dichtnut auf einem gegenüber dem nominalen Außendurchmesser der Fluidleitung geringerem Durchmesser auszubilden.

Mit besonderem Vorteil ist bei der Herstellung der Fluidleitung vorgesehen, diese wie allgemein üblich durch ein Extrusionsverfahren auszubilden, wodurch zunächst ein zylindrischer Kunststoff-Rohrkörper entsteht und günstigerweise anschließend im noch verformbaren Zustand der Fluidleitung zumindest die erste Stützkontur und die Dichtnut auszubilden, was in besonders vorteilhafterweise durch ein Korrugatorverfahren mittels Abformung von Formbacken, durch ein Heißprägeverfahren oder ähnliches erfolgen kann. Eine nachträgliche Bearbeitung der Rohrenden, insbesondere eine spanende Bearbeitung kann somit entfallen. Die Steckarmatur wird unabhängig von dem Rohr gefertigt und kann dann einfach von Hand oder maschinell auf dieses Leitungsende unter einer nur relativ geringen Radialdehnung aufgeschoben und an der ersten Stützkontur in Anlage gebracht werden.

Zur Fixierung der Steckarmatur innerhalb einer Muffe umfasst die Steckarmatur an deren Außenumfangsfläche eine Nut zur Aufnahme eines Sicherungselementes z.B. eines blech- oder drahtförmigen Sicherungsbügels. Eine weitere Nut bzw. ein Schlitz ist bei dieser Verbindung an der Muffe ausgeführt, so dass bei axialer Ausrichtung von Nut und Schlitz das Sicherungselement eingeführt und dort z.B. durch eine Verschnappung verliersicher festgelegt werden kann.

Mit weiterem Vorteil ist zwischen der Fluidleitung und der Steckarmatur eine Verdrehsicherung ausgebildet, wobei die Steckarmatur zugleich auch Mittel zur verdrehsicheren Anordnung an der Muffe umfasst. Auf diese Weise kann zum Beispiel eine ungeradlinig geformte oder verformte Fluidleitung mit einer definierten gegenseitigen Ausrichtung an einem die Muffe tragenden Bauteil, z.B. einem hydraulischen Geber- oder Nehmerzylinder oder einem anderen hydraulischen Element einer hydraulischen Kupplungsbetätigung verbunden werden.

Für die innerhalb der Fluidleitung befindliche Fluidströmung ist es zweckmäßig, wenn der Innendurchmesser der Fluidleitung im Bereich der ersten Stützkontur und der Dichtnut zumindest im Wesentlichen einem nominalen Innendurchmesser der Fluidleitung entspricht. Dadurch können insbesondere bei einer hydraulischen Kupplungsbetätigung während der dort auftretenden Druckauf- und Druckabbauphasen im gesamten System gleiche Druckverhältnisse geschaffen werden. Da die Fluidleitung bei der Steckverbindung von einer Muffe umgeben bzw. gefangen ist, kann zumindest der Bereich der ersten Stützkontur und der Dichtnut dadurch sogar mit einer gegenüber dem verbleibenden Leitungsabschnitt etwas verringerten Wandstärke ausgeführt werden.

Zur Vereinfachung der Montage und zur Vermeidung von Montagefehlern ist die Steckarmatur besonders vorteilhaft in Axialrichtung symmetrisch ausgeführt, was bedeutet, dass die Steckarmatur mit jeder Seite auf die Fluidleitung aufgeschoben werden kann. Diese stellt einen erheblichen Montagevorteil dar.

Als Werkstoff für die Fluidleitung und für die Steckarmatur eignet sich in besonderer Weise ein Polyamid, beispielsweise PA 12, welches zur Erhöhung der Festigkeit mit Zuschlagstoffen, z.B. Glasfasern, verstärkt sein kann.

Nachfolgend wird die Erfindung anhand der beigefügten Figuren beispielhaft beschrieben. Es zeigen:
- Fig. 1: ein Endabschnitt einer Fluidleitung mit einer daran angeordneten Steckarmatur in einer Axialschnittdarstellung;
- Fig. 2: eine zur Verbindung mit dem Endabschnitt der Fig. 1 vorgesehene Muffe;
- Fig. 3: eine Steckverbindung der in den Fig.1, 2 gezeigten Teile;
- Fig. 4: eine Prinzipdarstellung einer zwischen einer Fluidleitung und einer Muffe aus- gebildeten Verdrehsicherung.

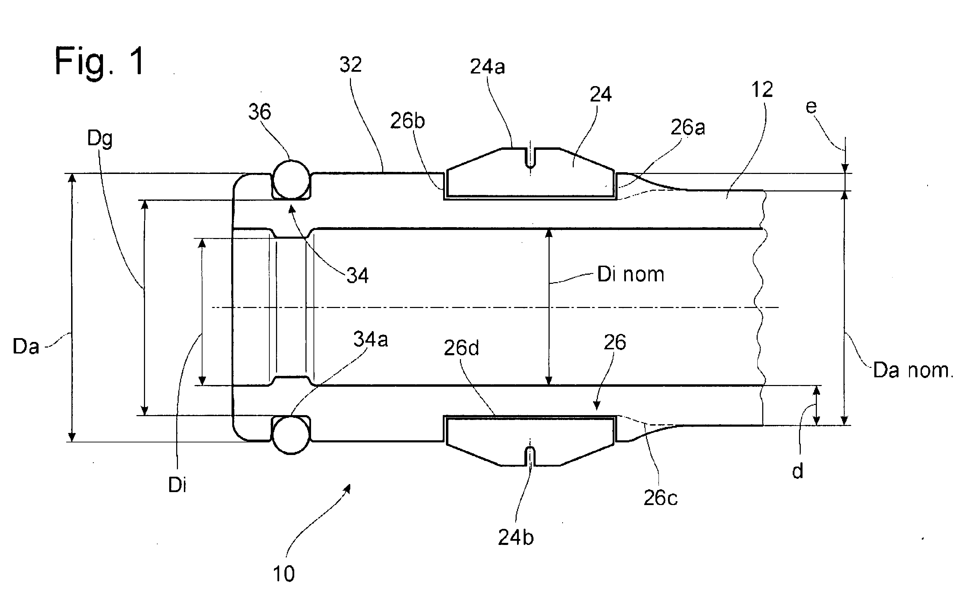

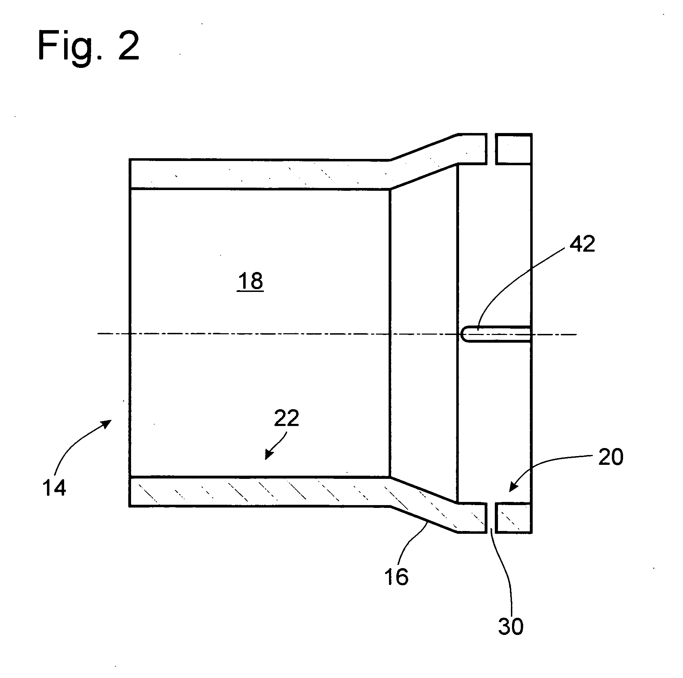

Fig. 1 zeigt einen Endabschnitt 10 einer aus PA 12 hergestellten Kunststoff-Fluidleitung 12, welche Bestandteil einer hydraulischen Betätigungseinrichtung zur Betätigung einer Fahrzeugkupplung ist und die in bekannter Weise zur Verbindung mit einem hydraulischen Nehmer- und einem Geberzylinder vorgesehen ist. Dazu ist an diesen jeweils eine in Fig. 2 dargestellte Muffe 14 zur Herstellung einer fluiddichten Steckverbindung vorgesehen, welche ein Gehäuse 16 mit einer im Durchmesser gestuften Ausnehmung 18 mit einem Befestigungsbereich 20 und einem mit kleinerem Durchmesser ausgeführten Dichtungsbereich 22 umfasst.

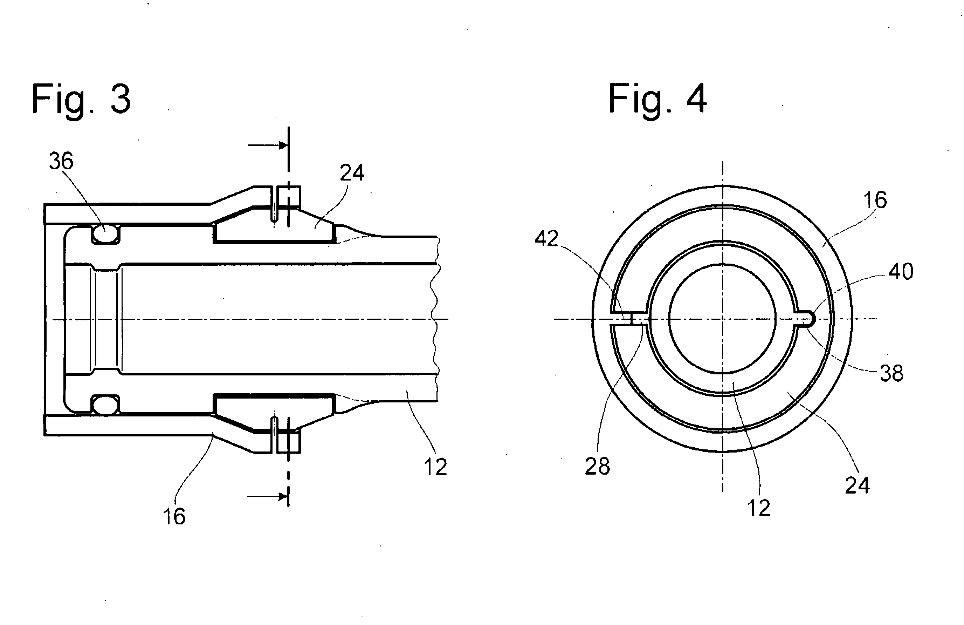

Der Endabschnitt 10 der Fluidleitung 12 trägt zur Verbindung mit der Muffe 14 eine einteilige, im Wesentlichen hülsenförmige und ebenfalls aus einem Kunststoff, insbesondere aus Polyamid gefertigte Steckarmatur 24 mit einer zu der Innenkontur der Muffe 14, insbesondere deren Befestigungsbereich 20, komplementären äußeren Gestalt, welche dazu in einer an der Fluidleitung 12 angeformten ringförmigen Stütznut 26 eingesetzt ist. Wie in dem noch zu erläuternden Querschnitt der Fig. 4 erkennbar, ist die Steckarmatur 24 mit einem in dem Schnitt der Fig. 1 nicht dargestellten durchgehenden Längsschlitz 28 ausgeführt und kann dadurch radial etwas aufgeweitet werden und somit von dem dargestellten Ende der Fluidleitung 12 aus in die Stütznut 26 aufgeschoben werden, wo diese dort einschnappt. Günstigerweise ist zur Erzielung eines sicheren Sitzes der Innendurchmesser der Hülse 24 im unverspannten Zustand minimal geringer als der Durchmesser des Nutgrundes Dg ausgeführt.

Die als axiale Anlagefläche 26b ausgeführte Nutwandung 26b stellt eine erste Stützkontur zur Abstützung der Fluidleitung 12 an der Steckarmatur 24 dar, wenn diese innerhalb der Muffe fixiert ist und ein Fluiddruck anliegt. Dabei wird die Fluidleitung entgegen deren Einsteckrichtung in die Muffe 14 gehalten. Die andere Nutwandung 26a dient im Wesentlichen lediglich der Festlegung der Steckarmatur 24 während deren Montage auf der Fluidleitung 12. Diese kann auch als eine eher kontinuierlich verlaufende Kontur 26c mit einem flacherem Durchmesseranstieg ausgebildet werden, wie dieses durch die Strichlinie in Fig. 1 angedeutet ist. Die Begrenzung 26a stellt somit eine zweite Stützkontur zur axialen Festlegung der Steckarmatur 24 in der zur ersten Stützkontur 26b abgewandten Axialrichtung dar. Ein sich durch Fertigungstoleranzen oder erst beim Gebrauch der Fluidleitung 12 ergebendes Axialspiel der Steckarmatur 24 innerhalb der Stütznut 26 kann bei. Verwendung in einem Kupplungsbetätigungssystem toleriert werden.

Die Steckarmatur 24 weist weiter an einem zylindrischen Abschnitt von deren Außenumfangsfläche 24a eine umlaufende Ringnut 24b auf, welche im zusammengesteckten Zustand mit einem an dem Befestigungsbereich 20 der Muffe 14 ausgeführten Schlitz 30 übereinstimmt, so dass in bekannter Weise durch diesen ein hier zeichnerisch nicht dargestelltes Sicherungselement in Form eines Federdrahtbügels eingeführt werden kann und wodurch die Teile 12; 24 und 14 verliersicher zueinander festgelegt werden.

Anstelle der Stütznut 26 kann alternativ an der Fluidleitung 12 auch eine andere Form ausgebildet sein, z.B. eine Wulst, welche vorteilhaft eine beim Korrugatorprozeß ausgebildete Vakuumrille darstellt. In diesem Fall wird die Steckarmatur 24 mit einer entsprechenden Nut ausgeführt.

In Fig. 1 ist erkennbar, dass die Steckarmatur 24 in Axialrichtung symmetrisch ausgeführt ist, so dass die Ringnut 24b mittig angeordnet ist und die Steckarmatur 24 bei der Montage von beiden Seiten montiert werden kann.

An dem axial über die Steckarmatur 24 vorstehendem Abschnitt 32 der Fluidleitung 12, dessen Außendurchmesser Da geringfügig kleiner ist als der Innendurchmesser des Dichtungsbereiches 22, ist integral mit der Fluidleitung 12 eine Dichtnut 34 zur Aufnahme eines Dichtrings 36 vorgesehen.

Die mit der Figur 1 dargestellte Fluidleitung 12 ist zunächst in an sich bekannter Weise durch ein Extrusionsverfahren hergestellt, wobei die Stützkontur 26, 26a, 26b und die Dichtnut 34 unmittelbar anschließend im noch verformbaren Zustand der Fluidleitung 12 durch ein Korrugatorverfahren mittels Abformung von Formbacken ausgebildet wurden. Die Fluidleitung 12 mit der an dieser ausgebildeten Stütznut 26 und der Dichtnut 34 einerseits und die Steckarmatur 24 andererseits sind mit deren Außendurchmesser Da bzw. mit deren Innendurchmesser so zueinander dimensioniert, dass beim Zusammenfügen der Fluidleitung 12 mit der Steckarmatur 24 letztere axial leicht über die Dichtnut 34 und bei Vorliegen eines Stützwulst zumindest teilweise über die erste Stützkontur aufschiebbar ist.

In dem gezeigten Ausführungsbeispiel sind die Bereiche, in denen die Dichtnut 34, die erste Stützkontur 26b und die zweite Stützkontur 26a ausgebildet sind, gegenüber einem nominalen Außendurchmesser Danom. der Fluidleitung 12 nur gering überhöht ausgeführt, wobei deren Überhöhung e auf eine halbe Wandstärke d der Fluidleitung 12 begrenzt ist. Der Nutgrund 34a der Dichtnut 34 ist hierbei auf einem gegenüber dem nominalen Außendurchmesser Danom. der Fluidleitung 12 geringerem Durchmesser Dg ausgebildet, wobei gleichzeitig der Innendurchmesser Di der Fluidleitung 12 im Bereich der Dichtnut 34 nur geringfügig kleiner als deren nominaler Innendurchmesser Dinom. ist und diesem somit im Wesentlichen entspricht. Im Bereich der ersten Stütznut 26 entspricht der Innendurchmesser sogar dem nominalen Innendurchmesser Dinom. der Fluidleitung 12.

Alternativ kann der Außendurchmesser der Fluidleitung 12 zumindest im Bereich der ersten Stützkontur 26b und der Dichtnut 34 im Wesentlichen auch dem nominalen Außendurchmesser Danom. der Fluidleitung 12 entsprechen, was bedeutet, dass die radiale Formgebung nur nach radial innen erfolgt.

Zur Ausbildung einer Verdrehsicherung zwischen der Fluidleitung 12 und der Muffe 14, kann, wie dieses im Querschnitt der Fig. 4 im Prinzip gezeigt ist, die Rotationssymmetrie der ansonsten umlaufenden Stütznut 26 z.B. durch einen sich innerhalb der Stütznut 26 zumindest teilweise in Axialrichtung erstreckenden Steg 38 oder allgemein durch eine lokale radiale abstehende oder auch nach innen gerichtete Formgebung aufgehoben werden. In diesen Steg 38 greift eine dazu an der Steckarmatur 24 korrespondierend ausgeführte Nut 40 ein. Der an der Hülse 24 vorgesehene Längsschlitz 28 bildet einen Eingriffsraum für einen am Befestigungsabschnitt 20 der Muffe 14 ausgeführten Steg 42. Auf diese Weise sind die Muffe 14 und die Fluidleitung 12 gegenseitig drehfest zugeordnet. Die Formgebung der Fluidleitung 12 kann zur Ausbildung einer solchen Verdrehsicherung, wie bereits vorstehend erwähnt, mittels Korrugieren und Abformen von Formbacken erfolgen.

## Patentansprüche

1. Fluidleitung (12) aus Kunststoff mit einer als Kunststoff-Anbauteil ausgebildeten Steckarmatur (24) zur Herstellung einer fluiddichten Steckverbindung mit einer dazu komplementär ausgebildeten Muffe (14) mit einer an einem Endabschnitt (10) der Fluidleitung (12) integral ausgebildeten ersten Stützkontur (26b) zur axialen Abstützung der Fluidleitung (12) an der Steckarmatur (24) unter der Wirkung eines Fluiddruckes und mit einem axial über die Steckarmatur (24) vorstehenden Abschnitt (32) der Fluidleitung (12), an dem eine Dichtnut (34) zur Aufnahme eines Dichtrings (36) ausgebildet ist, wobei der Endabschnitt (10) integral mit der Fluidleitung (12) ausgebildet ist, **dadurch gekennzeichnet,**
**dass** die Steckarmatur (24) radial aufweitbar ausgeführt ist und dass die Fluidleitung (12) mit der an dieser ausgebildeten ersten Stützkontur (26b) und der Dichtnut (34) einerseits und die Steckarmatur (24) andererseits mit deren Außendurchmesser (Da) bzw. mit deren Innendurchmesser so zueinander dimensioniert sind, dass beim Zusammenfügen der Fluidleitung (12) mit der Steckarmatur (24) letztere axial über die Dichtnut (34) und zumindest teilweise über die erste Stützkontur (26b) aufschiebbar ist.

2. Fluidleitung nach Anspruch 1,
**dadurch gekennzeichnet, dass** der Außendurchmesser (Da) der Fluidleitung (12) im Bereich der ersten Stützkontur (26b) und der Dichtnut (34) im Wesentlichen einem nominalen Außendurchmesser (Danom.) der Fluidleitung (12) entspricht oder dass die Fluidleitung (12) zur Ausbildung der Dichtnut (34) und der ersten Stützkontur (26b) einen gegenüber deren Außendurchmesser (Danom) überhöhten Bereich aufweist, dessen Überhöhung (e) eine halbe Wandstärke (d) der Fluidleitung (12) nicht übersteigt.

3. Fluidleitung nach Anspruch 1 oder 2,
**dadurch gekennzeichnet, dass** der Nutgrund (34a) der Dichtnut (34) auf einem gegenüber dem nominalen Außendurchmesser (Danom.) der Fluidleitung (12) geringerem Durchmesser (Dg) ausgebildet ist.

4. Fluidleitung nach einem der Ansprüche 1 - 3,
**dadurch gekennzeichnet, dass** die Fluidleitung (12) durch ein Extrusionsverfahren hergestellt ist und dass die erste Stützkontur (26b) und die Dichtnut (34) anschließend im noch verformbaren Zustand der Fluidleitung (12) durch ein Korrugatorverfahren mittels Abformung von Formbacken ausgebildet sind.

5. Fluidleitung nach einem der Ansprüche 1 - 4,
**dadurch gekennzeichnet, dass** die Fluidleitung (12) eine zweite Stützkontur (26a) zur axialen Festlegung der Steckarmatur (24) in der zur ersten Stützkontur (26b) abgewandten Axialrichtung aufweist.

6. Fluidleitung nach einem der Ansprüche 1 - 5,
**dadurch gekennzeichnet, dass** die Steckarmatur (24) an deren Außenumfangsfläche eine Nut (24b) zur Aufnahme eines Sicherungselementes zur Verbindung mit der Muffe (14) aufweist.

7. Fluidleitung nach einem der Ansprüche 1 - 6,
**dadurch gekennzeichnet, dass** zwischen der Fluidleitung (12) und der Steckarmatur (24) eine Verdrehsicherung (38, 40) ausgebildet ist und dass die Steckarmatur (24) Mittel (28) zur verdrehsicheren Anordnung an der Muffe (14) umfasst.

8. Fluidleitung nach einem der Ansprüche 1 - 7,
**dadurch gekennzeichnet, dass** ein Innendurchmesser (Di) der Fluidleitung (12) im Bereich der ersten Stützkontur (26b) und der Dichtnut (34) zumindest im Wesentlichen einem nominalen Innendurchmesser (Dinom.) der Fluidleitung (12) entspricht.

9. Fluidleitung nach einem der Ansprüche 1 - 8,
**dadurch gekennzeichnet, dass** die Steckarmatur (24) in Axialrichtung symmetrisch ausgeführt ist.

10. Fluidleitung nach einem der Ansprüche 1 - 9,
**dadurch gekennzeichnet, dass** die Fluidleitung (12) und die Steckarmatur (24) aus einem Polyamid hergestellt sind.

## Claims

1. Fluid line (12) made of plastic, having a plug-in fitting (24) in the form of a plastic attachment part for producing a fluid-tight plug-in connection with a socket (14) which is formed in a manner complementary thereto, having a first supporting contour (26b), which is formed integrally at an end portion (10) of the fluid line (12), for axially supporting the fluid line (12) at the plug-in fitting (24) under the action of a fluid pressure, and having a portion (32) of the fluid line (12) which protrudes axially over the plug-in fitting (24) and at which a sealing groove (34) for accommodating a sealing ring (36) is formed, wherein the end portion (10) is formed integrally with the fluid line (12), **characterized in that** the plug-in fitting (24) is configured in a radially widenable manner and **in that** the outside diameter (Da) and the inside diameter, respectively, of the fluid line (12) having the first supporting contour (26b) formed thereon and the sealing groove (34), on the one hand, and the plug-in fitting (24), on the other hand, are dimensioned with respect to one another such that when the fluid line (12) and the plug-in fitting (24) are assembled together, the latter can be pushed on axially over the sealing groove (34) and at least partially over the first supporting contour (26b).

2. Fluid line according to Claim 1, **characterized in that** the outside diameter (Da) of the fluid line (12) in the region of the first supporting contour (26b) and of the sealing groove (34) corresponds substantially to a nominal outside diameter (Danom.) of the fluid line (12), or **in that** the fluid line (12), in order to form the sealing groove (34) and the first supporting contour (26b), has a region which has an increased height with respect to the outside diameter thereof and the increased height (e) of which does not exceed half a wall thickness (d) of the fluid line (12).

3. Fluid line according to Claim 1 or 2, **characterized in that** the bottom (34a) of the sealing groove (34) is formed with a diameter (Dg) that is smaller than the nominal outside diameter (Danom.) of the fluid line (12).

4. Fluid line according to one of Claims 1-3, **characterized in that** the fluid line (12) is produced by an extrusion process, and **in that** the first supporting contour (26b) and the sealing groove (34) are subsequently formed, in the still deformable state of the fluid line (12), by a corrugation process by means of moulding by moulding jaws.

5. Fluid line according to one of Claims 1-4, **characterized in that** the fluid line (12) has a second supporting contour (26a) for axially fixing the plug-in fitting (24) in the axial direction remote from the first supporting contour (26b).

6. Fluid line according to one of Claims 1-5, **characterized in that** the plug-in fitting (24) has, on its outer circumferential surface, a groove (24b) for accommodating a securing element for connecting to the socket (14).

7. Fluid line according to one of Claims 1-6, **characterized in that** a rotation prevention means (38, 40) is formed between the fluid line (12) and the plug-in fitting (24), and **in that** the plug-in fitting (24) comprises means (28) for arranging it in rotationally secured manner on the socket (14).

8. Fluid line according to one of Claims 1-7, **characterized in that** an inside diameter (Di) of the fluid line (12), in the region of the first supporting contour (26b) and of the sealing groove (34), corresponds at least substantially to a nominal inside diameter (Dinom.) of the fluid line (12).

9. Fluid line according to one of Claims 1-8, **characterized in that** the plug-in fitting (24) is configured in a symmetrical manner in the axial direction.

10. Fluid line according to one of Claims 1-9, **characterized in that** the fluid line (12) and the plug-in fitting (24) are produced from a polyamide.

## Revendications

1. Conduite de fluide (12) en matière plastique dotée d'une armature enfichable (24) sous la forme d'une pièce rapportée en matière plastique pour la réalisation d'un assemblage enfichable étanche au fluide avec un manchon (14) de forme complémentaire à celle-ci avec un premier contour d'appui (26b) formé intégralement sur une partie d'extrémité (10) de la conduite de fluide (12) pour l'appui axial de la conduite de fluide (12) sur l'armature enfichable (24) sous l'action d'une pression de fluide et avec une partie (32) de la conduite de fluide (12) en saillie axiale au-delà de l'armature enfichable (24), et sur laquelle une rainure d'étanchéité (34) est formée afin de recevoir un joint torique (36), dans laquelle la partie d'extrémité (10) est formée intégralement avec la conduite de fluide (12), **caractérisée en ce que** l'armature enfichable (24) est réalisée de façon expansible radialement et **en ce que** la conduite de fluide (12) avec le premier contour d'appui (26b) formé sur celle-ci et la rainure d'étanchéité (34) d'une part et l'armature enfichable (24) d'autre part sont dimensionnées l'une par rapport à l'autre, au niveau de leur diamètre extérieur (Da) ou de leur diamètre intérieur, de telle manière que, lors de l'assemblage de la conduite de fluide (12) avec l'armature enfichable (24), cette dernière puisse être glissée axialement au-dessus de la rainure d'étanchéité (34) et au moins partiellement au-dessus du premier contour d'appui (26b).

2. Conduite de fluide selon la revendication 1, **caractérisée en ce que** le diamètre extérieur (Da) de la conduite de fluide (12) dans la région du premier contour d'appui (26b) et de la rainure d'étanchéité (34) correspond sensiblement à un diamètre extérieur nominal (Danom.) de la conduite de fluide (12) ou **en ce que** la conduite de fluide (12) présente, pour former la rainure d'étanchéité (34) et le premier contour d'appui (26b), une région surélevée par rapport à son diamètre extérieur (Danom.), dont la surélévation (e) ne dépasse pas la moitié de l'épaisseur de paroi (d) de la conduite de fluide (12).

3. Conduite de fluide selon la revendication 1 ou 2, **caractérisée en ce que** le fond de rainure (34a) de la rainure d'étanchéité (34) est formé sur un diamètre (Dg) plus petit par rapport au diamètre extérieur nominal (Danom.) de la conduite de fluide (12).

4. Conduite de fluide selon l'une quelconque des revendications 1 à 3, **caractérisée en ce que** la conduite de fluide (12) a été fabriquée par un procédé d'extrusion et **en ce que** le premier contour d'appui (26b) et la rainure d'étanchéité (34) ont été réalisés par la suite dans l'état encore déformable de la conduite de fluide (12) par un procédé d'ondulation par formage au moyen de mâchoires de moulage.

5. Conduite de fluide selon l'une quelconque des revendications 1 à 4, **caractérisée en ce que** la conduite de fluide (12) présente un deuxième contour d'appui (26a) pour l'immobilisation axiale de l'armature enfichable (24) dans la direction axiale opposée au premier contour d'appui (26b).

6. Conduite de fluide selon l'une quelconque des revendications 1 à 5, **caractérisée en ce que** l'armature enfichable (24) présente, sur sa surface latérale extérieure, une rainure (24b) destinée à recevoir un élément de fixation pour l'assemblage avec le manchon (14).

7. Conduite de fluide selon l'une quelconque des revendications 1 à 6, **caractérisée en ce qu'**un moyen de blocage contre la rotation (38, 40) est formé entre la conduite de fluide (12) et l'armature enfichable (24) et **en ce que** l'armature enfichable (24) comporte des moyens (28) pour l'agencement sans rotation sur le manchon (14).

8. Conduite de fluide selon l'une quelconque des revendications 1 à 7, **caractérisée en ce qu'**un diamètre intérieur (Di) de la conduite de fluide (12) dans la région du premier contour d'appui (26b) et de la rainure d'étanchéité (34) correspond au moins sensiblement à un diamètre intérieur nominal (Dinom.) de la conduite de fluide (12).

9. Conduite de fluide selon l'une quelconque des revendications 1 à 8, **caractérisée en ce que** l'armature enfichable (24) est réalisée de façon symétrique en direction axiale.

10. Conduite de fluide selon l'une quelconque des revendications 1 à 9, **caractérisée en ce que** la conduite de fluide (12) et l'armature enfichable (24) sont fabriquées à partir d'un polyamide.
